(19) Europäisches Patentamt

European Patent Office

Office européen des brevets

(11) EP 0 878 298 A2

# (12) EUROPÄISCHE PATENTANMELDUNG

(43) Veröffentlichungstag:
18.11.1998 Patentblatt 1998/47

(51) Int. Cl.$^6$: B32B 27/36, B65D 65/40

(21) Anmeldenummer: 98108017.9

(22) Anmeldetag: 02.05.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 15.05.1997 DE 19720505

(71) Anmelder: Hoechst Diafoil GmbH
65203 Wiesbaden (DE)

(72) Erfinder:
• Peiffer, Herbert
55126 Mainz (DE)

• Bennett, Cynthia
55232 Alzey (DE)
• Hilkert, Gottfried
55291 Saulheim (DE)
• Roth, Werner
65817 Eppstein (DE)

(74) Vertreter:
Schweitzer, Klaus, Dr. et al
Patentanwaltskanzlei Zounek,
Industriepark Kalle-Albert,
Rheingaustrasse 190-196
65203 Wiesbaden (DE)

(54) **Biaxial orientierte Polyesterfolie mit hoher Sauerstoffbarriere, Verfahren zu deren Herstellung und Verwendung**

(57) Offenbart ist eine biaxial orientierte Polyesterfolie mit einer Basisschicht, die zu mindestens 80 Gew.-% aus einem thermoplastischen Polyester besteht, einer Deckschicht und einer auf der Deckschicht befindlichen $O_2$-barrierefunktionalen Schicht, wobei die Folie dadurch gekennzeichnet ist, daß die Deckschicht aus einem Polymer oder einem Gemisch von Polymeren besteht, das mindestens 40 Gew.-% an Ethylen-2,6-naphthalat-Einheiten, bis zu 40 Gew.-% an Ethylen-terephthalat-Einheiten und gegebenenfalls bis zu 60 Gew.-% an Einheiten aus anderen aliphatischen, cycloaliphatischen oder aromatischen Diolen und/oder Dicarbonsäuren enthält, mit der Maßgabe, daß der $T_g2$-Wert der Polyesterfolie über dem $T_g2$-Wert der Basisschicht, aber unter dem $T_g2$-Wert der Deckschicht liegt. Die Folie ist besonders wenig durchlässig für Luftsauerstoff und zeigt einen hohen Glanz. Besonders geeignet ist sie zum Verpacken von licht- und luftempfindlichen Nahrungs- und Genußmitteln, sowie zur Herstellung von Isoliermaterialien.

EP 0 878 298 A2

**Beschreibung**

Die Erfindung betrifft eine biaxial orientierte Polyesterfolie mit einer Basisschicht, die zu mindestens 80 Gew.-% aus einem thermoplastischen Polyester besteht, einer Deckschicht und einer auf der Deckschicht befindlichen barriere-refunktionalen Schicht. Die Erfindung betrifft weiterhin ein Verfahren zur Herstellung der Folie und ihre Verwendung.

In vielen Fällen wird bei Lebensmittelverpackungen eine hohe Sperrwirkung (gleichbedeutend mit einer geringen Durchlässigkeit bzw. einer geringen Permeation) gegenüber Gasen, Wasserdampf und Aromastoffen verlangt. Ein gängiges Verfahren, solche Verpackungen herzustellen, besteht darin, die dafür verwendeten Kunststoffolien mit Aluminium im Hochvakuum zu bedampfen bzw. zu metallisieren. Ein weiteres gängiges Verfahren besteht darin, die Folien mit keramischen Materialien, wie $SiO_x$, $AlO_x$ oder $MgO_x$, zu beschichten. Die Sperrwirkung gegenüber den oben genannten Stoffen hängt im wesentlichen von der Art der Polymeren in der Folie und der Güte der aufgebrachten Sperrschichten ab. So haben metallisierte, biaxial orientierte Polyesterfolien eine sehr hohe Sperrwirkung gegenüber Gasen, wie Sauerstoff und Aromastoffen. Metallisierte, biaxial orientierte Polypropylenfolien wiederum besitzen eine hohe Wasserdampfbarriere.

Aufgrund ihrer guten Sperreigenschaffen werden mit metallisierten bzw. keramisch beschichteten Folien insbesondere Lebens- und Genußmittel verpackt, bei denen durch lange Lager- oder Transportzeiten die Gefahr besteht, daß im Falle einer nicht ausreichenden Barriere die verpackten Lebensmittel verderben, ranzig werden oder an Geschmack verlieren, beispielsweise bei Kaffee, fetthaltigen Snacks (Nüssen, Chips u.a.) oder kohlensäurehaltigen Getränken (in Standbeuteln; engl.: pouches).

Daneben eignen sich beschichtete Polyesterfolien zur thermischen Isolierung von technischen Geräten. Beispielsweise können mit Aluminium bedampfte Polyesterfolien zur Verbesserung der Isolierung von Kühlschränken verwendet werden. Mit diesen Folien wird eine Isolation erzeugt, die nach dem Thermokannenprinzip arbeitet. Die Isolation besteht dabei im wesentlichen aus zwei Laminaten (mehrere Lagen aluminiumbedampfter Polyesterfolien), in die z.B. Schaumstoffplatten eingeschweißt sind. Die unter Vakuum eingeschweißte Schaumstoffplatten dienen im wesentlichen als Abstandshalter zwischen den beiden Laminaten. Um das erforderliche Vakuum aufrechtzuhalten, müssen die Laminate eine sehr hohe Sauerstoffbarriere aufweisen.

Sollen Polyesterfolien mit einer aufgedampften Aluminiumschicht als Verpackungsmaterial verwendet werden, dann sind sie in der Regel Bestandteil eines mehrschichtigen Folienverbunds (Laminat). Daraus hergestellte Beutel lassen sich z. B. auf einer vertikalen Schlauchbeutel-, **Form-**, **Füll** und Verschließmaschine (vffs) füllen. Die Beute werden auf ihrer Innenseite (d.h. auf der dem Füllgut zugewandten Seite) gesiegelt, wobei die Siegelschicht in der Regel aus Polyethylen oder Polypropylen besteht. Der Folienverbund weist dabei den folgenden typischen Aufbau auf: Polyesterschicht/Aluminiumschicht/Kleberschicht/Siegelschicht. Bei einer Dicke des Laminats von etwa 50 bis 150 µm ist die Metallschicht nur 20 bis 50 nm dick. Eine sehr dünne Aluminiumschicht genügt daher bereits, um einen ausreichenden Lichtschutz und sehr gute Barriereeigenschatten zu erreichen.

Die Sauerstoffbarriere bzw. die Sauerstoffdurchlässigkeit wird in der Regel nicht an dem Laminat oder der Verpak-kung selbst, sondern an der metallisierten bzw. keramisch beschichteten Polyesterfolie gemessen. Um die Qualität der Lebens- oder Genußmittel auch bei längeren Lagerzeiten zu gewährleisten, darf die Sauerstoffdurchlässigkeit (gleich Permeation) der metallisierten Folie nicht mehr als 2 $cm^3/m^2$ bar d, insbesondere aber nicht mehr als 1 $cm^3/m^2$ bar d betragen. Zukünftig geht die Forderung der Verpackungsindustrie in Richtung einer noch weiter erhöhten Barriere, wobei Permeationswerte von deutlich weniger als 1,0 $cm^3/m^2$ bar d angestrebt werden.

Über den Zusammenhang zwischen Sauerstoffbarriere und aluminiumbedampfter Folie (Substrat) wurde bereits an mehreren Stellen berichtet. Eine detaillierte Zusammenfassung des Standes der Technik hierhber ist beispielsweise in der Dissertation von H. Utz (Technische Universität München 1995: "Barriereeigenschaften aluminiumbedampfter Kunststoffolien") zu finden.

Es ist noch nicht hinreichend erforscht, worauf die Barrierewirkung der metallisierten Folie im einzelnen beruht. Wichtige Einflußgrößen sind offensichtlich die Substratoberfläche und die Art des Substratpolymers sowie dessen Morphologie. Allgemein wird davon ausgegangen, daß glatte Oberflächen bessere Barriereeigenschaften ergeben (vgl. Utz, Seite 38 ff). Von Weiss (vgl. "Thin Solids Films" 204 (1991), S. 203-216) wurde hierzu gezeigt, daß in eine Beschichtung in unterschiedlichen Konzentrationen eingebrachte Titandioxidpartikel nach dem Aluminiumbedampfen mit steigendem $TiO_2$-Anteil höhere Sauerstoffdurchlässigkeiten ergeben. Den Untersuchungen von Utz zufolge soll zwischen der Oberflächenrauhigkeit der PET-Folie und der Sauerstoffbarriere kein unmittelbarer Zusammenhang bestehen.

Weiterhin ist bekannt, daß sich durch eine besondere Auswahl der Polymere für die als Substrat dienende Folie die Sauerstoffbarriere verbessern läßt (Schricker, G.: Metallisierte Kunststofffolien für höherwertige Verpackungen. In: ICI 5th International Metallising Symposium 1986, Cannes). Besonders geeignet sind beispielsweise Polyester, speziell solche aus Ethylenglykol und Terephthalsäure oder aus Ethylenglykol, Terephthalsäure und Naphthalin-2,6-dicarbonsäure. Daneben sind auch Polyamide, Ethylen-Vinylalkohol-Copolymere (EVOH) und Polyvinylidenchlorid vorteilhaft verwendbar. So beschreibt beispielsweise die US-A 5 506 014 einen Copolyester aus (a) 45 bis 85 mol-% Terephthalsäure, (b) 10 bis 40 mol-% Naphthalindicarbonsäure und (c) 5 bis 15 mol-% einer Dicarbonsäure mit 2 bis 8 Kohlenstoffatomen und (d) Ethylenglykol (die Molprozente beziehen sich auf den Gesamtanteil an Dicarbonsäuren). Dieser Polyester soll sich durch verbesserte Barriereeigenschaften gegenüber Gasen auszeichnen. Verwendet wird er u.a. für die Herstellung von Flaschen oder Behältern sowie von Folien unterschiedlicher Stärke. Nachteilig an den genannten Rohstoffen ist, daß sie gegenüber Polyethylenterephthalat (PET) deutlich teurer oder für die Anwendung in der Lebensmittelverpackung ungeeignet bzw. nicht amtlich zugelassen sind.

Weiterhin bekannt sind coextrudierte Polyesterfolien mit einer Basisschicht aus Polyethylenterephthalat, einem Polyester aus Ethylenglykol, Terephthalsäure und Naphthalin-2,6-dicarbonsäure und/oder einem Polyester aus Ethylenglykol und Naphthalin-2,6-dicarbonsäure und (mindestens) einer Deckschicht aus Copolymeren aus Polyethylenterephthalat und Polyethylen-2,6-naphthalat oder Polyethylen-2,6-naphthalat-Homopolymeren. Mindestens eine der Deckschichten enthält Pigmente. Es ist auch bekannt, solche Folien zu beschichten oder zu metallisieren.

In der EP-A 0 602 964 ist eine mehrschichtige Polyesterfolie für magnetische Aufzeichnungsmedien (insbesondere Magnetbänder) beschrieben. Sie enthält eine Schicht, die hauptsächlich aus einem Polyester aus Ethylenglykol und Naphthalin-2,6-dicarbonsäure besteht, und mindestens eine weitere Schicht, die im wesentlichen aus einem Copolyester besteht, der aus Ethylenglykol-, Diethylenglykol- und Naphthalin-2,6-dicarbonsäure-Einheiten aufgebaut ist. Die Folie kann auf einer oder beiden Seite(n) beschichtet werden.

Aufgabe der vorliegenden Erfindung ist es, eine beschichtete, biaxial orientierte Polyesterfolie zur Verfügung zu stellen, die sich durch eine hohe Sauerstoffbarriere (durch die Folie sollen weniger als 0,05 cm$^3$ Sauerstoff pro Quadratmeter und pro Tag diffundieren, wenn Luft mit einem Druck von 1 bar darauf lastet) auszeichnet. Die Folie soll den bekannten Verpackungsfolien dieser Art in den übrigen Eigenschaften mindestens gleichwertig sein. Sie soll sich zudem einfach und preiswert herstellen lassen. Eine weitere Aufgabe bestand darin, den Glanz der beschichteten Folie zu verbessern.

Gelöst wird die Aufgabe durch eine biaxial orientierte Polyesterfolie mit einer Basisschicht, die zu mindestens 80 Gew.-% aus einem thermoplastischen Polyester besteht, einer Deckschicht und einer auf der Deckschicht befindlichen metallischen oder keramischen Schicht, wobei die Folie dadurch gekennzeichnet ist, daß die Deckschicht aus einem Polymer oder einem Copolymer oder einem Gemisch von Polymeren besteht, das mindestens 40 Gew.-% an Ethylen-2,6-naphthalat-Einheiten, bis zu 40 Gew.-% an Ethylen-terephthalat-Einheiten und gegebenenfalls bis zu 60 Gew.% an Einheiten aus anderen aliphatischen, cycloaliphatischen oder aromatischen Diolen und/oder Dicarbonsäuren enthält, mit der Maßgabe, daß der $T_g2$-Wert der Polyesterfolie über dem $T_g2$-Wert der Basisschicht, aber unter dem $T_g2$-Wert der Deckschicht liegt.

Bevorzugt ist eine Polyesterfolie, in der die Polymere der Deckschicht mindestens 65 Gew.-% an Ethylen-2,6-naphthalat-Einheiten und bis zu 35 Gew.-% an Ethylenterephthalat-Einheiten enthält. Davon ist wiederum eine solche Polyesterfolie besonders bevorzugt, in der die Polymere der Deckschicht mindestens 70 Gew.-% an Ethylen-2,6-naphthalat-Einheiten und bis zu 30 Gew.-% an Ethylen-terephthalat-Einheiten enthalten.

Geeignete andere aliphatische Diole sind beispielsweise Diethylenglykol, Triethylenglykol, aliphatische Glykole der allgemeinen Formel HO-(CH$_2$)$_n$-OH, wobei n eine ganze Zahl von 3 bis 6 darstellt (insbesondere Propan-1,3-diol, Butan-1,4-diol,. Pentan-1,5-diol und Hexan-1,6-diol) oder verzweigte aliphatische Glykole mit bis zu 6 Kohlenstoff-Atomen, cycloaliphatische, ggf. heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-C$_6$H$_4$-X-C$_6$H$_4$-OH, wobei X für -CH$_2$-, - C(CH$_3$)$_2$-, -C(CF$_3$)$_2$-, -O-, -S- oder -SO$_2$- steht. Daneben sind auch Bisphenole der Formel HO-C$_6$H$_4$-C$_6$H$_4$-OH gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C$_3$-C$_{19}$) Alkandisäuren besonders geeignet, wobei der Alkanteil geradkettig oder verzweigt sein kann.

Vorzugsweise enthält die Deckschicht mindestens jeweils 35 Gew.-% an Ethylenglykol- und Naphthalin-2,6-dicarbonsäure-Einheiten. Die erfindungsgemäße Folie ist ferner dadurch gekennzeichnet, daß weniger als 0,05 cm$^3$, bevorzugt weniger als 0,03 cm$^3$, besonders bevorzugt weniger als 0,01 cm$^3$, an Luftsauerstoff pro Quadratmeter und Tag bei einem Druck von 1 bar hindurchdiffundieren können.

Gegenstand der vorliegenden Erfindung ist auch ein Verfahren zur Herstellung dieser Folie. Es umfaßt das

a) Herstellen einer Folie aus Basis- und Deckschicht(en) durch Coextrusion,

b) biaxiale Verstrecken der Folie,

c) Thermofixieren der verstreckten Folie und

d) Aufbringen einer O$_2$-barrierefunktionalen Schicht auf die thermofixierte Folie.

Zur Herstellung der Deckschicht werden zweckmäßig Granulate aus Polyethylenterephthalat und Polyethylen-2,6-naphthalat im gewünschten Mischungsverhältnis direkt einem Extruder zugeführt. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich Copolymere aus den Homopolymeren bilden.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Vor der Querstreckung kann man eine oder beide Oberfläche(n) der Folie nach den bekannten Verfahren in-line beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die biaxial verstreckte und thermofixierte Polyesterfolie kann vor dem Aufbringen der $O_2$-barrierefunktionalen Schicht auf einer oder beiden Seite(n) corona- oder flammbehandelt werden. Die Behandlungsintensität ist so gewählt, daß die Oberflächenspannung der Folie im allgemeinen über 45 mN/m liegt.

Das Aufbringen der $O_2$-barrierefunktionalen Schicht, insbesondere der Metallschicht bzw. der keramischen Schicht erfolgt zweckmäßig auf allgemein üblichen industriellen Anlagen. Metallschichten aus Aluminium werden üblicherweise durch Bedampfen hergestellt, während keramische Schichten daneben auch mit Elektronenstrahlverfahren oder durch Aufsputtern erzeugt werden können. Die Verfahrensparameter der Anlage beim Aufbringen der Metallschicht bzw. der keramischen Schicht auf die Folien entsprechen den Standardbedingungen. Die Metallisierung der Folien wird vorzugsweise so durchgeführt, daß die optische Dichte der metallisierten Folien im üblichen Bereich von ca. 2,2 bis 2,8 liegen. Das Aufbringen der keramischen Schicht auf die Folie wird so durchgeführt, daß die Schichtstärke der Oxidschicht vorzugsweise im Bereich von 30 bis 100 nm liegt. Die Bahngeschwindigkeit der zu beschichtenden Folie liegt bei allen Einstellungen zwischen 5 und 10 m/s. Auf die Metallisierung mit einer Laborbedampfungsanlage wurde nicht zurückgegeriffen, weil die Erfahrung gezeigt hat, daß dann die Barrierewerte in der Regel wesentlich höher sind und nicht zu Vergleichszwecken herangezogen werden können.

Von großem Vorteil bei diesem Verfahren ist, daß dem Extruder Granulate zugegeben werden können, die die Maschine nicht verkleben.

Die Basisschicht der Folie besteht bevorzugt zu mindestens 90 Gew.-% aus dem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Deckschicht vorkommen können.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Verarbeitung der Polymere hat es sich als günstig erwiesen, die Polymere für die Basisschicht und die Deckschicht(en) so zu wählen, daß sich die Viskositäten der jeweiligen Polymerschmelzen nicht zu sehr unterscheiden.

Im anderen Fall ist mit Fließstörungen oder Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie zu gewährleisten, sollte der SV-Wert der Copolymere für die Deckschicht im Bereich von 500 bis 1200 liegen. Falls erwünscht, kann an den jeweiligen Granulaten eine Festphasenkondensation durchgeführt werden, um die benötigten SV-Werte der Materialien einzustellen. Allgemein gilt, daß sich die SV-Werte der Polymerschmelzen für Basis- und Deckschicht(en) um nicht mehr als 200, vorzugsweise nicht mehr als 100, unterscheiden sollten.

Die Polymere für die Deckschicht können auf 3 verschiedene Weisen hergestellt werden:

a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.

b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.

c) PET und PEN werden als Granulat im gewünschten Verhältnis gemischt und die Mischung dem Extruder für die Deckschicht zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymere der Basisschicht identisch mit denen der Deckschicht. Diese werden der Basisschicht entweder direkt bei der Extrusion beigemischt oder sind automatisch in der Folie durch Regeneratzugabe enthalten. Der Anteil dieser Copolymere in der Basisschicht ist so gewählt, daß die Basisschicht kristallinen Charakter aufweist.

In einer weiteren Ausführungsform umfaßt die Folie auf der der Deckschicht abgewandten Seite eine weitere Deckschicht aus Polyethylenterephthalat, die ebenfalls wie die zu metallisierende Deckschicht Pigmente enthalten kann.

Die erfindungsgemäße Folie zeigt eine überraschend hohe Sauerstoffbarriere. Werden dagegen für die zu beschichtende Deckschicht(en) Polymere verwendet, die weniger als 40 Gew.-% Ethylen-2,6-naphthalat-Einheiten und mehr als 40 Gew.-% Ethylenterephthalat-Einheiten enthalten, dann ist die Folie in manchen Fällen zwar etwas weniger durchlässig für Sauerstoff als eine metallisierte oder beschichtete Standardpolyesterfolie (die zu 100 Gew.-% aus Polyetylenterephthalat besteht), die Durchlässigkeit ist jedoch noch immer viel zu hoch. Es wurde sogar gefunden, daß die Sauerstoffbarriere schlechter ist als bei einer metallisierten oder keramisch beschichteten Standardpolyesterfolie, wenn die Deckschicht 30 bis 40 Gew.-% Ethylen-2,6-naphthalat-Einheiten und 60 bis 70 Gew.-% Ethylenterephthalat-Einheiten enthält. Selbst unter diesen Umständen kann jedoch eine Folie mit einer Deckschicht, die zwischen 5 und 40 Gew.-% Ethylen-2,6-naphthalat-Einheiten und mehr als 40 Gew.-% Ethylen-terephthalat-Einheiten enthält vorteilhaft sein, wenn die Sauerstoffbarriere für die betreffende Anwendung keine entscheidende Rolle spielt.

Weiterhin zeichnen sich die erfindungsgemäßen Folien dadurch aus, daß die Glasübergangstemperatur $T_g$ des Copolymers bzw. der Copolymere der Deckschicht(en) im Vergleich zum Stand der Technik höher liegt als die Glasübergangstemperatur $T_g$ der Polymere der Basisschicht. Die Glasübergangstemperatur der eingesetzten Copolymere für die Deckschicht(en) liegt vorzugsweise im Bereich von 80 bis 102 °C. Bei der Bestimmung der Glasübergangstemperaturen mittels DSC können die Übergänge der beiden Schichten nicht unterschieden werden.

Glasübergänge, die beim ersten Aufheizvorgang an biaxial orientierten, wärmefixierten Folien bestimmt werden (im folgenden $T_g1$ genannt), sind durch die Kristallinität sowie die molekularen Spannungen im amorphen Anteil der Probe in ihrem Ausmaß relativ gering, über einen breiten Temperaturbereich verteilt und zu höheren Temperaturen verschoben. Vor allem aufgrund von Orientierungseffekten eignen sie sich nicht zur Charakterisierung eines Polymers. Die Auflösung von DSC-Meßgeräten reicht oft nicht aus, um die wegen der Orientierung und Kristallinität kleinen und "verschmierten" Glasstufen im ersten Aufheizvorgang ($T_g1$) der einzelnen Schichten der erfindungsgemäßen Folie zu erfassen. Wenn die Proben aufgeschmolzen und dann unter ihre Glasübergangstemperatur rasch wieder abgekühlt (abgeschreckt) werden, so werden die Orientierungseffekte eliminiert. Beim erneuten Aufheizen werden dann Glas-

übergänge (hier als $T_g2$ bezeichnet) gemessen, die eine höhere Intensität haben und charakteristisch sind für die jeweiligen Polymere. Die Glasübergänge der einzelnen Schichten lassen sich allerdings auch hier nicht unterscheiden, weil sich die Schichten beim Aufschmelzen vermischen und die darin enthaltenen Polyester untereinander Umesterungsreaktionen eingehen. Es ist jedoch völlig ausreichend, die $T_g2$ der gesamten coextrudierten Folien mit der $T_g2$ des für die Basisschicht verwendeten Polymers zu vergleichen. In bekannten Folien (wo beispielsweise die Deckschicht Isophtalsäure enthält) liegt der $T_g2$-Wert der Basisschicht höher als der der coextrudierten Folie, während der $T_g2$-Wert der Deckschicht niedriger liegt als der der Basisschicht und auch der der coextrudierten Folie. In der erfindungsgemäßen Folie ist dies gerade umgekehrt. Hier liegt der $T_g2$-Wert der coextrudierten Folie höher als der der Basisschicht, aber unterhalb des $T_g2$-Werts der Deckschicht.

Die geforderte hohe Sauerstoffsperre wird nicht erreicht, wenn die $O_2$-barrierefunktionale Schicht auf der der Deckschicht abgewandten Seite der Basisschicht (und nicht auf der Deckschicht selbst) aufgebracht ist. Das gilt auch dann, wenn die Zusammensetzung von Basis- und Deckschicht ansonsten der erfindungsgemäßen Folie entspricht.

Die Basisschicht und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Zur Einstellung weiterer gewünschter Eigenschaften kann die Folie beschichtet oder corona- bzw. flammvorbehandelt sein. Typische Beschichtungen sind haftvermittelnde, antistatisch, schlupfverbessernd oder dehäsiv wirkende Schichten. Es bietet sich an, diese zusätzlichen Schichten über inline coating mittels wässriger Dispersionen vor der Querverstreckung auf die Folie aufzubringen.

Die erfindungsgemäße Polyesterfolie enthält vorzugsweise noch eine zweite Deckschicht. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere oder Polymermischungen enthalten kann, welche aber nicht mit denen der ersten Deckschicht identisch sein müssen. Die zweite Deckschicht kann auch andere gängige Deckschichtpolymere enthalten.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3μm und liegt vorzugsweise im Bereich von 0,5 bis 15μm, insbesondere 1,0 bis 10 μm.

Die Dicke der Deckschicht(en) ist im allgemeinen größer als 0,1 μm und liegt vorzugsweise im Bereich von 0,2 bis 5 μm, insbesondere 0,2 bis 4 μm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 100 μm, insbesondere 5 bis 50 μm, vorzugsweise 6 bis 30 μm, wobei die Basisschicht einen Anteil von vorzugsweise etwa 40 bis 90 % an der Gesamtdicke hat.

Die $O_2$-barrierefunktionale Schicht besteht bevorzugt aus Aluminium. Doch sind auch andere Materialien geeignet, die sich in Form einer dünnen, zusammenhängenden Schicht aufbringen lassen. Insbesondere ist z.B. Silizium geeignet, welches im Vergleich zu Aluminium eine transparente Barriereschicht ergibt. Die keramische Schicht besteht bevorzugt aus Oxiden von Elementen der II., III. oder IV. Hauptgruppe des Periodensystems, insbesondere Oxiden des Magnesiums, Aluminiums oder Siliciums. Allgemein sind solche metallischen oder keramischen Materialien verwendet, die bei vermindertem Druck bzw. im Vakuum aufgebracht werden können. Die Dicke der aufgebrachten Schicht beträgt allgemein 10 bis 100 nm.

Ein weiterer Vorteil besteht darin, daß die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einer Konzentration von 20 bis 50 Gew.-%, bezogen auf das Gesamtgewicht der Folie, wiederverwendet werden kann, ohne daß dabei die physikalischen Eigenschaften der Folie nennenswert negativ beeinflußt werden.

Die Folie eignet sich hervorragend zur Verpackung von licht- und/oder luftempfindlichen Nahrungs- und Genußmitteln. Speziell geeignet ist sie zur Herstellung von Vakuumverpackungen für Kaffee, insbesondere gemahlenem Kaffee. Daneben ist sie auch zur Herstellung von Isoliermaterialien, z.B. den eingangs beschriebenen Dämmplatten für Kühlschränke, geeignet.

Zur Charakterisierung der Rohstoffe und der Folien wurden die folgenden Methoden benutzt:

Zur Messung der optischen Dichte wurde das Densitometer Macbeth TD-904 von Macbeth (Division of Kollmorgen Instruments Corp.) eingesetzt. Die optische Dichte ist definiert als $OD = - \lg l/l_0$, wobei $l$: die Intensität des eingestrahlten Lichtes, $l_0$: die Intensität des ausgestrahlten Lichtes und $l/l_0$: die Transmission bedeuten.

Die Messung der Sauerstoffbarriere an den beschichteten Folien erfolgte mit einem OX-TRAN 2/20 von Mocon Modern Controls (USA) entsprechend DIN 53 380, Teil 3.

Zur Bestimmung des SV-Wertes (SV = solvent viscosity) wurde eine Polyester-Probe in einem Lösungsmittel (Dichloressigsäure) gelöst. Die Viskosität dieser Lösung sowie die Viskosität des reinen Lösungsmittels wurden in einem Ubbelohde-Viskosimeter gemessen. Aus den beiden Werten wurde der Quotient ermittelt, davon 1,000 abgezogen und dieser Wert mit 1000 multipliziert. Das Resultat war der SV-Wert ("solution viscosity").

Die Reibung wurde nach DIN 53 375 bestimmt. Die Gleitreibungszahl wurde 14 Tage nach der Produktion gemessen.

Die Oberflächenspannung wurde mittels der sogenannten Tintenmethode (DIN 53 364) bestimmt.

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und werden von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Die Glasübergangstemperaturen $T_g1$ und $T_g2$ wurden anhand von Folienproben mit Hilfe der DSC (Differential Scanning Calorimetry) bestimmt. Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang $T_g1$ ermittelt. Die Proben zeigten vielfach eine Enthalpierelaxation (ein Peak) zu Beginn des stufenförmigen Glasübergangs. Als $T_g1$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet. Möglicherweise überdeckten die peakförmigen Enthalpierelaxationen die Feinstruktur der Stufe oder die Auflösung des Gerätes war für eine Auftrennung der kleinen, "verschmierten" Übergängen von orientierten, kristallinen Proben nicht ausreichend. Um die thermische Vorgeschichte zu eliminieren, wurden die Proben nach dem Aufheizen 5 Minuten bei 300° C gehalten und dann anschließend mit flüssigem Stickstoff abgeschreckt. Aus dem Thermogramm für das zweite Aufheizen wurde die Temperatur für den Glasübergang $T_g2$ als die Temperatur bei halber Stufenhöhe entnommen.

Die folgenden Beispiele illustrieren die Erfindung. Die verwendeten Produkte (Warenzeichen und Firmen) werden jeweils nur einmal angegeben und beziehen sich dann auch auf die folgenden Beispiele.

## Beispiel 1

Das Polymer für die Deckschicht wurde durch gemeinsame Polykondensation hergestellt. Dazu wurden Dimethylterephthalat und Naphthalin-2,6-dicarbonsäuredimethylester in einem Reaktor im Molverhältnis 0,54 : 1,00 (entspricht einer Zusammensetzung von 30 Gew.-% Ethylenterephthalat-Einheiten und 70 Gew.-% Ethylen-2,6-naphthalat-Einheiten im fertigen Copolymer) gemischt und mit Ethyenglykol und 300 ppm Manganacetat als Katalysator versetzt. Bei einer Temperatur von 160 bis 250°C und bei Atmosphärendruck wurde unter Rühren die Umesterung durchgeführt. Das dabei entstehende Methanol wurde abdestilliert. Anschließend wurde eine äquimolare Menge phosphorige Säure als Stabilisator und 400 ppm Antimontrioxid als Katalysator zugegeben. Bei 280 °C und einem Druck von weniger als 1 mbar wurde dann unter Rühren die Polykondensation durchgeführt. Anhand des am Rührer gemessenen Drehmoments ließ sich das erreichte Molekulargewicht ermitteln. Die Schmelze wurde nach Ende der Reaktion mit Stickstoff aus dem Reaktor gedrückt und granuliert.

## Beispiel 2

Für die Deckschicht wurden handelsübliche Polyethylenterephthalat- und Polyethylen-2,6-naphthalat-Granulate verwendet. Die Granulate wurden jeweils etwa 4 h bei einer Temperatur von etwa 160 °C getrocknet und kristallisiert. Anschließend wurden die beiden Materialien in einem Verhältnis von 30 : 70 (30 Gew.-% Polyethylenterephthalat- und 70 Gew.-% Polyethylen-2,6-naphthalat) in einen Mischer gegeben und dort unter Rühren homogenisiert. Die Mischung wurde anschließend in einem Zweischnecken-Compounder (ZSK der Fa. Werner und Pfleiderer, Stuttgart) bei einer Temperatur von etwa 300°C und einer Verweilzeit von ca. 3 min extrudiert. Die Schmelze wurde zu Strängen extrudiert und in Form von Chips geschnitten. In der Extrusion entstand ein Copolymer durch Reaktion zwischen dem Polyethylenterephthalat und Polyethylen-2,6-naphthalat.

**Beispiel 3**

Beispiel 2 wurde wiederholt mit der Abweichung, daß Chips aus Polyethylenterephthalat und Polyethylen-2,6-naphthalat in einem Mischungsverhältnis von 3 : 7 direkt dem Einschneckenextruder für die Folienherstellung zugeführt wurden. Dort wurden die beiden Materialien bei etwa 300 °C extrudiert. Die Schmelze wurde filtriert und in einer Mehrschichtdüse zu einem Flachfilm ausgeformt und als Deckschicht der Basisschicht überlagert. Der Mehrschichtfilm wurde über die Düsenlippe ausgestoßen und auf einer Kühlwalze verfestigt. Die Verweilzeit der beiden Polymere in der Extrusion betrug ca. 5 min. Die weiteren Verarbeitungsschritte waren wie oben angegeben. Auch hier entstand das Copolymer in der Extrusion bei den angegebenen Bedingungen.

**Beispiel 4**

Chips aus Polyethylenterephthalat wurden bei 160 °C auf eine Restfeuchte von kleiner 50 ppm getrocknet und dem Extruder für die Basisschicht zugeführt. Daneben wurden Chips aus Polyethylenterephthalat und Polyethylen-2,6-naphthalat (im Gewichtsverhältnis von 3 : 7) ebenfalls bei 160 °C auf eine Restfeuchte von kleiner 50 ppm getrocknet und den beiden Extrudern für die Deckschichten zugeführt. Die Bedingungen im Extruder für die Deckschichten waren wie in Beispiel 3.

Durch Coextrusion und anschließende stufenweise Orientierung in Längs- und Querrichtung wurde dann eine transparente dreischichtige Folie mit symmetrischem Aufbau und einer Gesamtdicke von 12 µm hergestellt. Die Deckschichten hatten eine Dicke von jeweils 2 µm. Die Folie wurde anschließend einseitig in einem industriellen Metallisierer mit Aluminium im Vakuum bedampft. Die Beschichtungsgeschwindigkeit betrug 5 m/s.

Basisschicht:

| | |
|---|---|
| 95 Gew.-% | Polyethylenterephthalat (RT 49 von Hoechst AG) mit einem SV-Wert von 800 und |
| 5 Gew.-% | Masterbatch aus 99 Gew.-% Polyethylenterephthalat und 1,0 Gew.-% Kieselsäurepartikel ($^{®}$Sylobloc 44 H der Firma Grace) mit einer mittleren Teilchengröße von 4,5 µm |

Deckschichten:

| | |
|---|---|
| 70 Gew.-% | Polyethylen-2,6-naphthalat ($^{®}$Polyclear N 100 Prepolymer von Hoechst AG) mit einem SV-Wert von 1000, |
| 20 Gew.-% | Polyethylenterephthalat mit einem SV-Wert von 800 und |
| 10 Gew.-% | Masterbatch aus 99,0 Gew.-% Polyethylenterephthalat und 1,0 Gew.-% Kieselsäurepartikel mit einer mittleren Teilchengröße von 2,0 µm |

Die einzelnen Verfahrensschritte waren:

| Extrusion | Temperaturen: | Deckschicht: | 300 °C |
|---|---|---|---|
| | | Basisschicht: | 300 °C |
| | Temperatur der Abzugswalze: | | 30 °C |
| | Düsenspaltweite: | | 1 mm |
| | Temperatur der Abzugswalze: | | 30 °C |
| Längsstrek-kung | Temperatur: | | 85-135 °C |
| | Längsstreckverhältnis: | | 4,0 : 1 |

(fortgesetzt)

| Querstreckung | Temperatur: | 85-135 °C |
| | Querstreckverhältnis: | 4,0 : 1 |
| Fixierung | Temperatur: | 230 °C |

Die Folie hatte die geforderte Sauerstoffbarriere. Die Eigenschaften der so hergestellten Folie sind in Tabelle 2 dargestellt (in den Tabellen ist die Basisschicht als "B", die Deckschicht als "A"; eine eventuell vorhandene zusätzliche Deckschicht als "A" oder "C" bezeichnet, je nach dem, ob sie die gleiche oder eine andere Zusammensetzung als die metallisierte oder keramisch beschichtete Deckschicht hat; dementsprechend ist die Seite der Folie, auf der sich die metallisierte oder keramisch beschichtete Deckschicht befindet, als "A-Seite" bezeichnet; als "C-Seite" ist die nichtmetallisierte Seite bezeichnet, auch dann, wenn sich keine Deckschicht C auf dieser Seite befindet).

**Beispiel 5**

Analog zu Beispiel 4 wurde eine coextrudierte Folie hergestellt, wobei jetzt durch Coextrusion eine dreischichtige Folie mit einer Basisschicht und zwei Deckschichten mit einer Gesamtdicke von 12 $\mu$m hergestellt wurde. Die Deckschichten hatten dabei eine Dicke von jeweils 2 $\mu$m.

Die Folie wurde in einem industrieüblichen Metallisierer mit Aluminium unter Vakuum bedampft. Die Beschichtungsgeschwindigkeit betrug 5 m/s.

Basisschicht:

100 Gew.-%   Polyethylenterephthalat mit einem SV-Wert von 800

Deckschicht (nur diese Deckschicht wurde später metallisiert):

70 Gew.-%   Polyethylen-2,6-naphthalat mit einem SV-Wert von 1000,
20 Gew.-%   Polyethylenterephthalat mit einem SV-Wert von 800 und
10 Gew.-%   Masterbatch aus 99,0 Gew.-% Polyethylenterephthalat und 1,0 Gew.-% Kieselsäurepartikel mit einer mittleren Teilchengröße von 2,0 $\mu$m

weitere Deckschicht:

80 Gew.-%   Polyethylenterephthalat mit einem SV-Wert von 800 und
20 Gew.-%   Masterbatch aus 99,0 Gew.-% Polyethylenterephthalat und 1,0 Gew.-% Kieselsäurepartikel, die zu 50 % eine mittlere Teilchengröße von 2,5 $\mu$m und zu 50 % eine mittlere Teilchengröße von 1,0 $\mu$m hatten

Die Verfahrensbedingungen waren für alle Schichten wie im Beispiel 4.

**Beispiel 6**

Eine coextrudierte Folie mit einer Basisschicht und zwei Deckschichten wurde gemäß Beispiel 5 hergestellt, mit der Abweichung, daß die für die Metallisierung vorgesehene Deckschicht nun folgende Zusammensetzung hatte:

90 Gew.-%   Polyethylen-2,6-naphthalat mit einem SV-Wert von 1000 und
10 Gew.-%   Masterbatch aus 99,0 Gew.-% Polyethylenterephthalat und 1,0 Gew.-% Kieselsäurepartikel mit einer mittleren Teilchengröße von 1,0 $\mu$m.

Die Herstellung der Folie erfolgte wie in Beispiel 4. Die Metallisierung der Folie erfolgte wie in Beispiel 5.

**Beispiel 7**

Eine coextrudierte Folie mit einer Basisschicht und zwei Deckschichten wurde gemäß Beispiel 5 hergestellt ,mit der Abweichung, daß die für die Metallisierung vorgesehene Deckschicht jetzt die folgende Zusammensetzung hatte:

90 Gew.-%   Polyethylen-2,6-naphthalat mit einem SV-Wert von 1000,
10 Gew.-%   Masterbatch aus 99,0 Gew.-% Polyethylen-2,6-naphthalat mit einem SV-Wert von 1000 und 1,0 Gew.-%

Kieselsäurepartikel mit einer mittleren Teilchengröße von 1,0 μm.

Die Herstellung der Folie erfolgte analog zu Beispiel 4, doch wurden jetzt die Temperaturen bei der Längs- und Querstreckung um etwa 10 °C angehoben. Die Metallisierung der Folie erfolgte wie in Beispiel 5.

**Beispiel 8**

Analog zu Beispiel 5 wurde durch Coextrusion eine dreischichtige Folie mit einer Basisschicht und je einer Deckschicht auf beiden Seiten hergestellt. Die Gesamtdicke der Folie betrug 12 μm. Die Deckschichten hatten dabei eine Dicke von jeweils 2 μm.
Basisschicht:

100 Gew.-%   Polyethylenterephthalat mit einem SV-Wert von 800

Deckschicht (diese wurde später metallisiert):

100 Gew.-%   Polyethylen-2,6-naphthalat mit einem SV-Wert von 1000

weitere Deckschicht:

80 Gew.-%   Polyethylenterephthalat mit einem SV-Wert von 800 und
20 Gew.-%   Masterbatch aus 99,0 Gew.-% Polyethylenterephthalat und 1,0 Gew.-% Kieselsäurepartikel, die zu 50 %
            eine mittlere Teilchengröße von 2,5 μm und zu 50 % eine mittlere Teilchengröße von 1,0 μm hatten.

Die Verfahrensbedingungen waren für alle Schichten wie in Beispiel 7 angegeben. Die Metallisierung der Folie erfolgte wie in Beispiel 5 beschrieben.

**Beispiel 9**

Analog zu Beispiel 4 wurde eine coextrudierte Folie hergestellt, wobei jetzt das Copolymer für die Deckschichten nach Beispiel 2 hergestellt wurde. Sonst entsprachen die Bedingungen dem Beispiel 4.

**Beispiel 10**

Analog zu Beispiel 4 wurde eine coextrudierte Folie hergestellt, wobei jetzt das Copolymer für die Deckschichten nach Beispiel 1 hergestellt wurde. Die übrigen die Bedingungen entsprachen wieder dem Beispiel 4.

**Beispiel 11**

In ähnlicher Weise wie in Beispiel 4 wurde durch Coextrusion eine zweischichtige Folie mit einer Basis- und einer Deckschicht hergestellt. Die Gesamtdicke der Folie lag bei 12 μm. Die Deckschicht hatte dabei eine Dicke von 2,5 μm.
Basisschicht:

80 Gew.-%   Polyethylenterephthalat mit einem SV-Wert von 800 und
20 Gew.-%   Masterbatch aus 99,0 Gew.-% Polyethylenterephthalat und 1,0 Gew.-% Kieselsäurepartikel, die zu 50 %
            eine mittlere Teilchengröße von 2,5 μm und zu 50 % eine mittlere Teilchengröße von 1,0 μm hatten.

Deckschicht:

60 Gew.-%   Polyethylennaphthalat mit einem SV-Wert von 1000,
30 Gew.-%   Polyethylenterephthalatmit einem SV-Wert von 800 und
10 Gew.-%   Masterbatch aus 99,0 Gew.-% Polyethylenterephthalat und 1,0 Gew.-% Kieselsäurepartikel mit einer mittleren Teilchengröße von 2,0 μm.

Die Verfahrensbedingungen waren für alle Schichten wie in Beispiel 4 gewählt. Die Metallisierung der Folie erfolgte wie in Beispiel 5.

**Beispiel 12**

Es wurde eine Folie gemäß Beispiel 7 hergestellt mit der Ausnahme, daß die Deckschichtdicke statt 2 μm nur 1,5 μm betrug.

**Beispiel 13**

Analog zu Beispiel 5 wurde durch Coextrusion eine dreischichtige Folie mit einer Basisschicht und je einer Deckschicht auf beiden Seiten hergestellt. Die Gesamtdicke der Folie betrug 12 μm. Die Deckschichten hatten dabei eine Dicke von jeweils 2 μm.

Basisschicht:

100 Gew.-%   Polyethylenterephthalat mit einem SV-Wert von 800

Deckschicht (diese wurde später metallisiert):

100 Gew.-%   Polyethylen-2,6-naphthalat mit einem SV-Wert von 1000

weitere Deckschicht:

80 Gew.-%   Polyethylen-2,6-naphthalat mit einem SV-Wert von 1000
20 Gew.-%   Masterbatch aus 99,0 Gew.-% Polyethylen-2,6-naphthalat und 1,0 Gew.-% Kieselsäurepartikel, die zu 50 % eine mittlere Teilchengröße von 2,5 μm und zu 50 % eine mittlere Teilchengröße von 1,0 μm hatten.

Die Verfahrensbedingungen waren für alle Schichten wie in Beispiel 7 angegeben. Die Metallisierung der Folie erfolgte wie in Beispiel 5 beschrieben. Im Vergleich zur Folie aus den Beispielen 7 und 8 zeichnet sich diese Folie durch ein weitaus geringeres curling aus.

**Vergleichsbeispiel V1**

Es wurde eine Folie entsprechend Beispiel 11 hergestellt. Für die zu metallisierende Deckschicht wurde jedoch ein Copolyester aus 82 Gew.-% Ethylenterephthalat und 18 Gew.-% Ethylenisophthalat verwendet. Die Folieneigenschaften sind in Tabelle 2 zusammengestellt.

**Vergleichsbeispiel V2**

Eine einschichtige PET-Folie wurde mit folgender Zusammensetzung

80 Gew.-%   Polyethylenterephthalat mit einem SV-Wert von 800 und
20 Gew.-%   Masterbatch aus 99,0 Gew.-% Polyethylenterephthalat und 1,0 Gew.-% Kieselsäurepartikel, die zu 50 % eine mittlere Teilchengröße von 2,5 μm und zu 50 % eine mittlere Teilchengröße von 1,0 μm hatten,

hergestellt und anschließend metallisiert. Die (noch nicht metallisierte) Folie war relativ trübe. Die metallisierte Folie wies einen verminderten Glanz auf.

**Vergleichsbeispiel V3**

Eine einschichtige PEN-Folie wurde mit folgender Zusammensetzung

80 Gew.-%   Polyethylen-2,6-naphthalat mit einem SV-Wert von 1000 und
20 Gew.-%   Masterbatch aus 99,0 Gew.-% Polyethylen-2,6-naphthalat und 1,0 Gew.-% Kieselsäurepartikel, die zu 50 % eine mittlere Teilchengröße von 2,5 μm und zu 50 % eine mittlere Teilchengröße von 1,0 μm hatten,

hergestellt und anschließend metallisiert. Die Folie zeigte sehr gute Barrierewerte.

**Vergleichsbeispiel V4**

Analog zu Beispiel 11 wurde durch Coextrusion eine zweischichtige Folie mit einer Basis- und einer Deckschicht hergestellt. Die Gesamtdicke betrug 12 μm. Die Deckschicht hatte dabei eine Dicke von 2,5 μm.

Basisschicht:

80 Gew.-% Polyethylenterephthalat mit einem SV-Wert von 800 und
20 Gew.-% Masterbatch aus 99,0 Gew.-% Polyethylenterephthalat und 1,0 Gew.-% Kieselsäurepartikel, die zu 50 % eine mittlere Teilchengröße von 2,5 μm und zu 50 % eine mittlere Teilchengröße von 1,0 μm hatten.

Deckschicht:

50 Gew.-% Polyethylennaphthalat mit einem SV-Wert von 1000,
40 Gew.-% Polyethylenterephthalat mit einem SV-Wert von 800 und
10 Gew.-% Masterbatch aus 99,0 Gew.-% Polyethylenterephthalat und 1,0 Gew.-% Kieselsäurepartikel mit einer mittleren Teilchengröße von 2,0 μm.Die Verfahrensbedingungen waren für alle Schichten wie in Beispiel 4 gewählt.

**Vergleichsbeispiel V5**

Es wurde eine Folie nach der Rezeptur und den Verfahrensbedingungen von Beispiel 8 hergestellt. Allerdings wurde hier nicht die Oberfläche der ersten, sondern der zweiten Deckschicht metallisiert.

Tabelle 1

| Beispiel Nr. | Ethylen-2,6-naphthalat-Einheiten in der Deckschicht A (in Gew.-%) | Ethylenterephthalat-Einheiten in der Deckschicht A (in Gew.-%) | Ethylenisophthalat-Einheiten in der Deckschicht A (in Gew.-%) | $T_g1$ (°C) | $T_g2$ (°C) |
|---|---|---|---|---|---|
| 4 | 70 | 30 | 0 | 97 | 82,5 |
| 5 | 70 | 30 | 0 | 97 | 82,5 |
| 6 | 90 | 10 | 0 | 100 | 88 |
| 7 | 100 | 0 | 0 | 102 | 90 |
| 8 | 100 | 0 | 0 | 102 | 90 |
| 9 | 70 | 30 | 0 | 97 | 82,5 |
| 10 | 70 | 30 | 0 | 97 | 82,5 |
| 11 | 60 | 40 | 0 | 95 | 82 |
| 12 | 100 | 0 | 0 | 102 | 88 |
| 13 | 100 | 0 | 0 | 102 | 91 |
| V1 | 0 | 82 | 18 | 68 | 72 |
| V2 | 0 | 100 | 0 | 80 | 80 |
| V3 | 100 | 0 | 0 | 102 | 102 |
| V4 | 50 | 50 | 0 | 92 | 81 |
| V5 | 100 | 0 | 0 | 102 | 90 |

Tabelle 2

| Beispiel Nr. | Foliendicke (µm) | Deck-schicht dicke (µm) | Folienauf-bau | Sauerstoff-barriere (cm³/m²bar d) | optische Dichte der Folie | Glanz (60 ° C) | | Trübung[1] |
|---|---|---|---|---|---|---|---|---|
| | | | | | | A-Seite | B-Seite | |
| 4 | 12 | 2,0 | ABA | 0,25 | 2,60 | 175 | 175 | 2,5 |
| 5 | 12 | 2,0 | ABC | 0,26 | 2,60 | 174 | 175 | 2,6 |
| 6 | 12 | 2,0 | ABC | 0,2 | 2,60 | 176 | 175 | 2,5 |
| 7 | 12 | 2,0 | ABC | 0,12 | 2,55 | 155 | 155 | 4,0 |
| 8 | 12 | 2,0 | ABC | 0,07 | 2,55 | 160 | 155 | 4,0 |
| 9 | 12 | 2,0 | ABA | 0,25 | 2,60 | 175 | 175 | 2,5 |
| 10 | 12 | 2,0 | ABA | 0,25 | 2,60 | 175 | 175 | 2,5 |
| 11 | 12 | 2,5 | AB | 0,28 | 2,60 | 175 | 178 | 1,5 |
| 12 | 12 | 1,5 | ABC | 0,17 | 2,60 | 160 | 165 | 3,5 |
| 13 | 12 | 2,0 | ABC | 0,08 | 2,60 | 155 | 155 | 3,5 |
| V1 | 12 | 3,0 | AB | 1,1 | 2,60 | 145 | 160 | 3,0 |
| V2 | 24 | 12 | A | 1,0 | 2,70 | 120 | 150 | 6,5 |
| V3 | 24 | 12 | A | 0,05 | 2,60 | 120 | 150 | 6,5 |
| V4 | 12 | 3,0 | AB | 1,8 | 2,60 | 175 | 178 | 1,5 |
| V5 | 12 | 3,0 | ABC | 0,9 | 2,60 | 175 | 178 | 4,0 |

1) gemessen an der nicht metallisierten Folie

## Patentansprüche

1. Biaxial orientierte Polyesterfolie mit einer Basisschicht, die zu mindestens 80 Gew.-% aus einem thermoplastischen Polyester besteht, einer Deckschicht und einer auf der Deckschicht befindlichen $O_2$-barrierefunktionalen Schicht, wobei die Folie dadurch gekennzeichnet ist, daß die Deckschicht aus einem Polymer oder einem Gemisch von Polymeren besteht, das mindestens 40 Gew.-% an Ethylen-2,6-naphthalat-Einheiten, bis zu 40 Gew.-% an Ethylenterephthalat-Einheiten und gegebenenfalls bis zu 60 Gew.% an Einheiten aus anderen aliphatischen, cycloaliphatischen oder aromatischen Diolen und/oder Dicarbonsäuren enthält, mit der Maßgabe, daß der $T_g2$-Wert der Polyesterfolie über dem $T_g2$-Wert der Basisschicht, aber unter dem $T_g2$-Wert der Deckschicht liegt.

2. Folie gemäß Anspruch 1, dadurch gekennzeichnet, daß die Polymere der Deckschicht mindestens 65 Gew:-% an Ethylen-2,6-naphthalat-Einheiten und bis zu 35 Gew.-% an Ethylen-terephthalat-Einheiten, besonders bevorzugt mindestens 70 Gew.-% an Ethylen-2,6-naphthalat-Einheiten und bis zu 30 Gew.-% an Ethylen-terephthalat-Einheiten enthalten.

3. Folie gemäß Anspruch 1 oder 2, dadurch gekennzeichnet, daß die Deckschicht eine Dicke von 0,1 bis 5 µm, bevorzugt von 0,2 bis 4,5 µm, besonders bevorzugt von 0,3 bis 4 µm, aufweist.

4. Folie gemäß einem oder mehreren der Anspüche 1 bis 3, dadurch gekennzeichnet, daß die Deckschicht pigmentiert ist.

5. Folie gemäß einem oder mehreren der Ansprüche 1 bis 4, dadurch gekennzeichnet, daß die Folie eine zusätzliche Deckschicht auf der der $O_2$-barrierefunktionalen Schicht abgewandten Seite der Basisschicht umfaßt.

6. Folie gemäß Anspruch 5, dadurch gekennzeichnet, daß die zusätzliche Deckschicht pigmentiert ist.

7. Folie gemäß einem oder mehreren der Ansprüche 1 bis 6, dadurch gekennzeichnet, daß zwischen der Basisschicht und mindestens einer der Deckschichten noch eine Zwischenschicht befindet.

8. Folie gemäß einem oder mehreren der Ansprüche 1 bis 7, dadurch gekennzeichnet, daß sie eine Gesamtdicke von 4 bis 100 $\mu$m, bevorzugt 5 bis 50 $\mu$m, besonders bevorzugt 6 bis 30 $\mu$m, aufweist, wobei die Basisschicht 40 bis 90 % der Gesamtfoliendicke ausmacht.

9. Folie gemäß einem oder mehreren der Ansprüche 1 bis 8, dadurch gekennzeichnet, daß die $O_2$-barrierefunktionale Schicht eine Metallschicht ist und diese metallische Folie eine optische Dichte im Bereich von 2,2 bis 2,8 aufweist.

10. Folie gemäß einem oder mehreren der Ansprüche 1 bis 9, dadurch gekennezeichnet, daß die $O_2$-barrierefunktionale Schicht aus Aluminium Silicium, $SiO_x$, $AlO_x$ oder $MgO_x$ besteht.

11. Folie gemäß einem oder mehreren der Ansprüche 1 bis 10, dadurch gekennzeichnet, daß weniger als 0,05 cm$^3$, bevorzugt weniger als 0,03 cm$^3$, besonders bevorzugt weniger als 0,01 cm$^3$, an Luftsauerstoff pro Quadratmeter und Tag bei einem Druck von 1 bar durch sie hindurchdiffundieren können.

12. Biaxial orientierte Polyesterfolie mit einer Basisschicht, die zu mindestens 80 Gew.-% aus einem thermoplastischen Polyester besteht, einer Deckschicht und einer auf der Deckschicht befindlichen $O_2$-barrierefunktionalen Schicht, wobei die Folie dadurch gekennzeichnet ist, daß die Deckschicht aus einem Polymer oder einem Gemisch von Polymeren besteht, das mindestens 5 Gew.-% an Ethylen-2,6-naphthalat-Einheiten, bis zu 40 Gew.-% an Ethylen-terephthalat-Einheiten und gegebenenfalls bis zu 60 Gew.% an Einheiten aus anderen aliphatischen, cycloaliphatischen oder aromatischen Diolen und/oder Dicarbonsäuren enthält, mit der Maßgabe, daß der $T_g2$-Wert der Polyesterfolie über dem $T_g2$-Wert der Basisschicht, aber unter dem $T_g2$-Wert der Deckschicht liegt.

13. Verfahren zur Herstellung der Folie nach einem oder mehreren der Ansprüche 1 bis 12, umfassend die Schritte

    a) Herstellen einer Folie aus Basis- und Deckschicht(en) durch Coextrusion,
    b) biaxiales Verstrecken der Folie,
    c) Thermofixieren der verstreckten Folie und
    d) Aufbringen der $O_2$-barrierefunktionalen Schicht auf die thermofixierte Folie.

14. Verfahren gemäß Anspruch 13, dadurch gekennzeichnet, daß die biaxiale Verstreckung sequentiell durchgeführt wird.

15. Verfahren gemäß Anspruch 14, dadurch gekennzeichnet, daß die Längsstreckung bei 80 bis 130 °C und die Querstreckung bei 90 bis 150 °C durchgeführt wird.

16. Verfahren gemäß Anspruch 14 oder 15, dadurch gekennzeichnet, daß das Längsstreckverhältnis im Bereich von 2,5 : 1 bis 6 : 1, bevorzugt von 3 : 1 bis 5,5 : 1, und das Querstreckverhältnis im Bereich von 3,0 : 1 bis 5,0 : 1, bevorzugt von 3,5 : 1 bis 4,5 : 1, liegt.

17. Verfahren gemäß einem oder mehreren der Ansprüche 13 bis 17, dadurch gekennzeichnet, daß die Folie bei der Thermofixierung etwa 0,1 bis 10 s lang bei einer Temperatur von 150 bis 250 °C gehalten wird.

18. Verfahren gemäß einem oder mehreren der Ansprüche 13 bis 17, dadurch gekennzeichnet, daß die thermofixierte Folie vor dem Aufbringen der $O_2$-barrierefunktionalen Schicht in-line beschichtet wird.

19. Verfahren gemäß einem oder mehreren der Ansprüche 13 bis 18, dadurch gekennzeichnet, daß die thermofixierte Folie vor dem Aufbringen der $O_2$-barrierefunktionalen Schicht auf einer oder beiden Seiten corona- oder flammbehandelt wird.

20. Verwendung der Folie nach einem oder mehreren der Ansprüche 1 bis 8 zum Verpacken von Lebens- und Genußmittel.

21. Verwendung der Folie nach einem oder mehreren der Ansprüche 1 bis 12 zur Herstellung von Isoliermaterialien.